# EUROPÄISCHE PATENTANMELDUNG

(11) **EP 1 237 119 A1**
(43) Veröffentlichungstag der Anmeldung: **04.09.2002**
(21) Anmeldenummer: 02003409.6
(22) Anmeldetag: 14.02.2002
(51) Int. Cl.: G06K 11/16, G06K 9/00

(54) **Schreibplatte mit einer zusätzlichen Schrifteingabefläche**

(30) Priorität: 28.02.2001 DE 10109669
(71) Anmelder: BS Biometric Systems GmbH, 53123 Bonn (DE)
(72) Erfinder: Baltus, René, 53125 Bonn (DE)
(74) Vertreter: COHAUSZ DAWIDOWICZ HANNIG & PARTNER

(57) **Zusammenfassung**

Die Erfindung betrifft eine Schreibplatte (1) mit einer Schrifteingabefläche, die die vom Schreibinstrument auf die Eingabefläche ausgeübten Drücke erfasst und an einen angeschlossenen Computer weitergibt. Die Schreibplatte weist mindestens zwei Schrifteingabeflächen (2,3) auf, von denen eine zum Erfassen von handschriftlichem Text und/oder Grafik und eine zweite insbesondere kleinere zum Erfassen einer Unterschrift vorgesehen ist.

## Beschreibung

Die Erfindung betrifft eine Schreibplatte mit einer Schrifteingabefläche, die die vom Schreibinstrument auf die Eingabefläche ausgeübten Drücke erfasst und an einen angeschlossenen Computer weitergibt.

Es sind Schrifteingabeflächen bekannt, die durch Druckmessung die Schrift insbesondere eine Unterschrift erfassen, so dass diese in einem Computer gespeichert werden kann. Eine danach eingegebene Schrift oder Unterschrift kann dann vom Computer mit der ersten verglichen und identifiziert werden. Ein solches Gerät ist aus dem europäischen Patent 0 560 356 bekannt. Bei diesen bekannten Geräten ist auf der Schreibplatte immer nur eine Schrifteingabefläche angeordnet.

Aufgabe der Erfindung ist es, eine Schreibplatte der eingangs genannten Art so zu verbessern, dass mehrere Arbeiten und Funktionen ermöglicht werden.

Diese Aufgabe wird erfindungsgemäß dadurch gelöst, dass die Schreibplatte mindestens zwei Schrifteingabeflächen aufweist, von denen eine zum Erfassen von handschriftlichem Text und/oder Grafik und eine zweite insbesondere kleinere zum Erfassen einer Unterschrift vorgesehen ist.

Durch eine solche Anordnung ist es für den Benutzer wesentlich einfacher zwischen der Eingabe von Schrift und Grafik und der Eingabe von Unterschriften zu unterscheiden. Der Benutzer erkennt sofort, dass die ersteSchrifteingabefläche zum Erfassen von Text und/oder Grafik und die zweite zum Erfassen einer Unterschrift genutzt werden kann.

Besonders vorteilhaft ist es hierbei, wenn die zweite Schreibeingabefläche in oder auf der Schreibplatte verschieblich oder versetzbar befestigt ist, so dass eine hohe Flexibilität der Anordnung gegeben ist.

Vorzugsweise wird vorgeschlagen, dass mindestens eine der Schreibeingabeflächen gänzlich oder teilweise abdeckbar ist. Auch ist von Vorteil, wenn die kleinere Schrifteingabefläche unterhalb der größeren Schrifteingabefläche liegt.

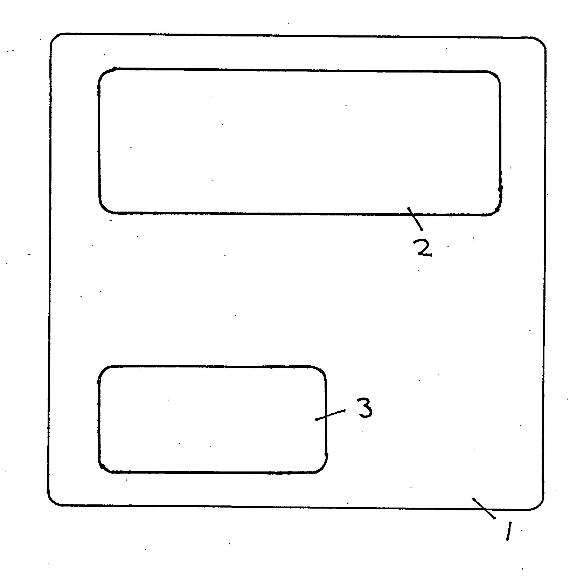

Ein Ausführungsbeispiel der Erfindung ist in der Zeichnung in einer Draufsicht schematisch dargestellt und wird im folgenden näher beschrieben.

Eine insbesondere rechteckförmige ebene Schreibplatte 1 weist eine erste Schreibeingabefläche 2 auf, die in der oberen Hälfte der Schreibplatte 1 angeordnet ist. Unterhalb der ersten Schreibeingabefläche befindet sich insbesondere in der unteren Hälfte der Schreibplatte 1 eine zweite insbesondere kleinere Schreibeingabefläche 3. Die erste Schreibeingabefläche ist vorzugsweise für Schrift oder Grafik vorgesehen, die von Hand eingegeben wird und die zweite für die Eingabe einer Unterschrift.

Bevor auf der Schreibplatte 1 geschrieben wird, wird über diese ein Blatt insbesondere aus Papier gelegt, so dass nicht direkt auf die Schreibeingabeflächen, sondern auf das Papier im Bereich der Schreibeingabeflächen 2, 3 geschrieben wird. Hierbei sind unter der Schreibplatte 1, vorzugsweise unter den zwei Schreibeingabeflächen, Drucksensoren angeordnet, die die von einem Schreibinstrument erzeugten Drücke zumindest in X- und Y-Richtung in der Ebene der Schreibfläche erfassen. Diese auftretenden Kräfte werden von den Drucksensoren erfasst und von einem angeschlossenen Computer ausgewertet. Weitere Informationen zu dieser Technik sind der europäischen Patentschrift 0 560 356 entnehmbar.

Die Schreibeingabeflächen 2 und/oder 3 sind vorzugsweise in die Schreibplatte 1 eingelassen. Sie können aber auch so angeordnet sein, dass sie in der Schreibplatte 1 verschieblich oder versetzbar befestigt sind.

In einer weiteren Ausführung ist mindestens eine der beiden Schreibeingabeflächen 2, 3 teilweise oder ganz abdeckbar.

## Patentansprüche

1. Schreibplatte (1) mit einer Schrifteingabefläche (2), die die vom Schreibinstrument auf die Eingabefläche ausgeübten Drücke erfasst und an einen angeschlossenen Computer weitergibt, **dadurch gekennzeichnet, dass** die Schreibplatte (1) mindestens zwei Schrifteingabeflächen (2, 3) aufweist, von denen eine (2) zum Erfassen von handschriftlichem Text und/oder Grafik und eine zweite insbesondere kleinere (3) zum Erfassen einer Unterschrift vorgesehen ist.

2. Schreibplatte nach Anspruch 1, **dadurch gekennzeichnet, dass** die zweite Schreibeingabefläche (3) in oder auf der Schreibplatte (1) verschieblich oder versetzbar befestigt ist.

3. Schreibplatte nach Anspruch 1 oder 2, **dadurch gekennzeichnet, dass** mindestens eine der Schreibeingabeflächen (2, 3) gänzlich oder teilweise abdeckbar ist.

4. Schreibplatte nach einem der vorherigen Ansprüche, **dadurch gekennzeichnet, dass** die kleinere Schrifteingabefläche (3) unterhalb der größeren Schrifteingabefläche (2) liegt.
